# EUROPEAN PATENT SPECIFICATION

(11) **EP 3 771 517 B1**
(45) Date of publication and mention of the grant of the patent: **28.06.2023**
(21) Application number: 20186442.8
(22) Date of filing: 17.07.2020
(51) Int. Cl.: B23Q 11/10, B01D 45/04, B01D 45/08, B01D 46/00

(54) **DEVICE ADAPTED TO THE SEPARATION OF SHAVINGS CONTAINED IN A CUTTING FLUID USED IN MACHINE TOOLS**
VORRICHTUNG ZUR TRENNUNG VON IN EINEM IN WERKZEUGMASCHINEN VERWENDETEN KÜHLSCHMIERSTOFF ENTHALTENEN SPÄNEN
DISPOSITIF APTE À LA SÉPARATION DE COPEAUX CONTENUS DANS UN LUBRO-RÉFRIGÉRANT UTILISÉ PAR DES MACHINES-OUTILS

(30) Priority: 31.07.2019 IT 201900013572
(43) Date of publication of application: 03.02.2021
(73) Proprietor: Carraro, Alberto, 36030 Vicenza (IT)
(72) Inventor: Carraro, Alberto, 36030 Vicenza (IT)
(74) Representative: Bettello, Pietro

(56) References cited:
- CN-A- 107 126 768
- CN-B- 106 823 557
- DE-U1-202005 010 341
- GB-A- 2 167 681
- KR-A- 20040 051 058

## Description

The present invention relates to a device adapted to the separation of shavings contained in a cutting fluid used in machine tools.

It is known that machine tools, such as lathes and cutters in particular, use a fluid to lubricate the cutting tools, as well as to cool them and rinse the shavings produced by the machining, in order to reduce the friction and wear of the tools themselves.

Such a fluid is called cutting fluid or lubricoolant and consists of a lubricating oil of mineral, vegetable or synthetic origin.

Of course, during the machining process, there is a continuous flow of this cutting fluid at the removal area of the shavings and obviously this results in a mixture of cutting fluid with the shavings inside; containers are clearly provided in which, during the machining, this mixture accumulates to avoid dirtying the underlying area, as well as to facilitate the recovery operations of the cutting fluid and the shavings. In fact, the cutting fluid is a quite expensive fluid which clearly tends to be recovered, both for ecological and economic reasons. It is absolutely clear that the mixture formed by fluid and shavings contained therein must be adequately treated to carry out this necessary separation. After carrying it out, the cutting fluid can obviously be reused, while the shavings are sold as recycled ferrous material.

Tanks of considerable size are currently used and, after a few months of normal use of the machine tool (typically every two or three months), the tank is emptied by means of a special suction device and its contents are dropped into a special tank. Basically these tanks have a capacity of a few hundred litres and are therefore quite bulky and complex to move and transport.

In any case, some operators separate the cutting fluid and shavings manually with sieves and the like, but obviously this operation is rather long and complicated to perform.

Special devices also exist that suck the mixture and then filter it so as to separate the liquid, which is discharged into a special tank, from the shavings, which are placed in another container.

By way of example, the industrial filtration machine described in Italian patent application No. 102018000003133 is mentioned, with the same inventor as the present application.

In this and other similar machines, this operation is carried out under vacuum, creating a suitable depression within itself. Therefore, it is evident that the enclosure which encloses the mixture, during this operation, must be kept in depression by providing relatively thick walls, as well as suitable gaskets. This leads to devices which are particularly heavy and bulky and ensures that these devices have not had great commercial success.

The document KR 20040051058 A describes a powder collection device contained in an air flow to be used in particular in incinerators, in cement production plants, in grain and sand treatment plants, as well as in thermal power plants and in steelworks and thus not for the separation of the shavings from the fluid that contains them, where a turret is present in which a depression is created to suck air containing said powder. In the upper part of the turret a plurality of Venturi tubes is present which causes an acceleration of the air flow which is sent outside, while the powder is filtered and separated from the air by means of the filter cloth placed at the bottom of the turret, upstream of the Venturi tubes, so that substantially powder-free air exits said turret. However, it is evident that this device is absolutely unsuitable for separating metal shavings from the liquid containing them.

The document GB 2167681 A describes a device for the separation of flakes and small elements of asbestos from an air flow conveying them, to then convey the air substantially free of asbestos, which is notoriously highly carcinogenic, to the outside, especially when it is in powder form. The air containing the asbestos flakes and powder is conveyed against the walls of a single conical deflector and then the asbestos falls into a hopper and is then expelled through an underlying valve. However, this device is also absolutely unsuitable for separating metal shavings from the liquid containing them.

Other state of the art documents are: DE 202005010341 U1, CN 107126768 A and CN 106823557 B.

Object of the present invention is to provide a device adapted to the separation of shavings contained in a cutting fluid used in machine tools, which is free from the previously-mentioned drawbacks and therefore much lighter than the devices adapted to perform the same operations, as well as easier for the operator to use.

The above is obtained, according to the invention, by providing that a first state of filtration is present in the device, consisting of a turret into which a mixture of air and cutting fluid to be treated is sucked. A pump acts on this turret, creating a depression within itself which sucks up this mixture, within the aforesaid turret a plurality of inclined plates being present, arranged above the point of inlet of the mixture sucked into the turret, which is flooded by said mixture, intercepting the cutting fluid in the form of drops. On the bottom of the turret there is a rotary valve, which has a plurality of radial septa into which the mixture of cutting fluid and shavings enters, which is subsequently made to fall into an underlying device for the complete separation of the two elements.

In particular, it is envisaged that most of the mixture consisting of the cutting fluid and shavings precipitate by gravity to the bottom of the turret, thus being conveyed into the rotary valve, while it is envisaged that the portion of said mixture, which, in the form of mist, is dragged upwards, strikes the inclined plates, precisely due to the depression in force in the turret; in particular the plates, after being struck by said mist, intercept the aforesaid in the form of drops, which, in turn, by gravity, are made to fall into the rotary valve.

These and further characteristics of the invention will now be described in detail hereinafter with reference to some particular embodiments thereof, given solely by way of non-limiting example, with the aid of the attached drawings, in which;
- in figg. 1 and 2 a schematic side view and a front view of the device according to the invention are respectively shown;
- in fig. 3 a schematic view of the turret present in the device according to the invention is shown;
- in fig. 4 a front view of said device is shown, always without a closing wall for the sake of clarity;
- in fig. 5 a side view of the device according to the invention is shown, always without a closing wall for the sake of clarity.

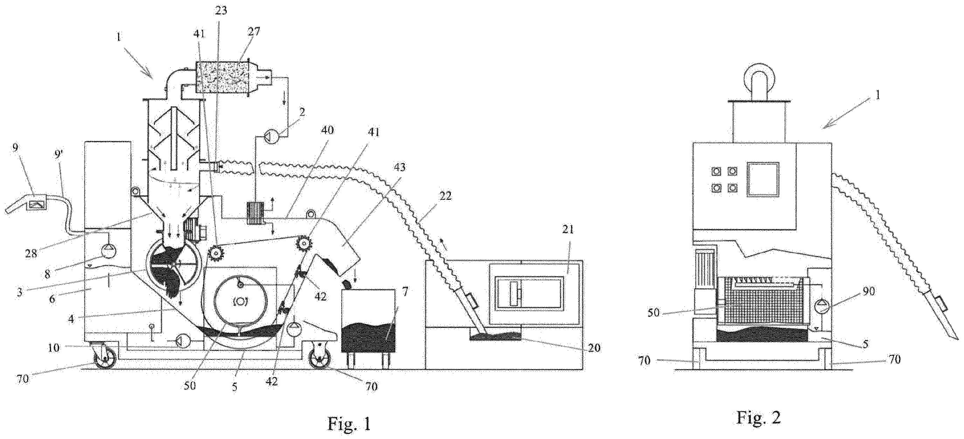

As can be seen in particular in figures 1 and 2, the device according to the invention has a turret 1, on which a pump 2 acts, adapted to create a depression within itself. A rotary valve 3 is provided on the bottom of the turret, better specified below, by means of which the mixture of cutting fluid and shavings is made to drop into a first tank 4. As will be better explained below, after separating the cutting fluid from the shavings, the cutting fluid is fed through a pump 10 into a third storage tank 6; vice versa the shavings are fed into an external container 7.

In the third tank 6 a special second pump 8 is provided, which allows the suction of the cutting fluid, which can be fed to the outside by means of a gun 9 or other similar device.

However, the overall result of the operation is that of having a mass of shavings available which, being covered with oily substances, is generally called "sludge", while there is also a tank containing the "clean" cutting fluid, which is immediately available, without any further processing, to be used in other shaving removal machines.

Again in figure 1 it can be seen that the mixture of cutting fluid and shavings, previously inserted in a special container 20, generally placed near the machine tool 21, is fed through a conduit 22 inside the turret 1, thanks to the fact that within the aforesaid a depression exists which is caused by the presence of the pump 2.

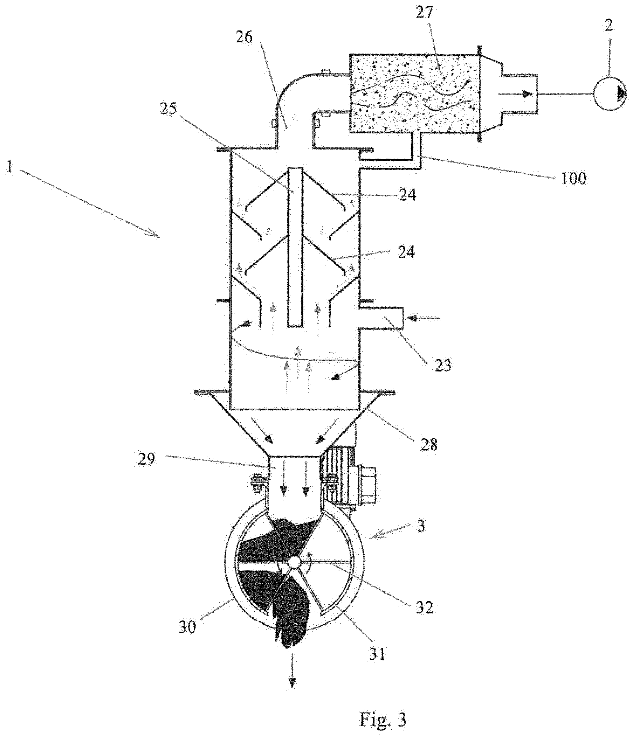

In fact, as can be seen in more detail in figure 3, this pump 2 acts on the turret 1, which causes a depression inside the turret itself, which in turn causes the suction in the same by means of the inlet 23 of the mixture of cutting fluid and shavings. This mixture, inside the turret 1, floods the plates 24 present within the same; in particular some of the plates are integral with the inner surface of the turret 1, while other plates are integral with a central element 25 arranged axially within the turret and integral with means not visible in the drawing for simplicity in the containment structure of the turret itself. However, it should be noted that other embodiments of these plates may be envisaged, both as regards their shape and their arrangement, without thereby departing from the scope of protection of the claims. These plates are arranged above the entry point of the mixture sucked into the turret. Therefore the mixture is partially intercepted by these plates, depositing themselves in the form of drops, which then accumulate on the plates themselves.

Vice versa, an air flow exits from the top 26 of the turret 1, sucked by the pump 2; advantageously upstream of said pump a coalescent filter 27 is present, adapted to intercept the mixture particles still present in the air flow, as they have not been intercepted by the plates 24. Advantageously, a conduit 100 is also provided which connects the filter 27 with the inside of the turret 1, so that the cutting fluid captured in the filter is re-introduced inside the turret 1, thus being able to fall in the form of drops.

Vice versa, the mixture intercepted by the aforesaid is destined to first fall by gravity into a suitable hopper 28, which ends with a vertical conduit 29, into a rotary valve 3; the latter, with a conformation known per se, has a circular casing 31, with an external shell 30, within which a plurality of radial septa 32 are present, which rotate continuously. In particular, as can be seen clearly from said figure 3, the mixture of cutting fluid and shavings is placed in the spaces existing between two contiguous septa and, when one of these spaces is placed in the lower position, in which the casing 31 is open, it in turn precipitates downwards. In fact, if figure 3 is carefully observed, in which it is envisaged that the rotary valve 3 rotates in an anti-clockwise way, it can be seen that the spaces present between the septa 32 arranged at the top, as well as the spaces existing between the septa 32 arranged laterally, are still filled with mixture; vice versa, the mixture arranged in the space above the lower opening of the casing 31 is destined to fall downwards, while the spaces existing between the septa arranged at the right part of the rotary valve are completely free of mixture, which has already been made to fall.

Back to figures 1 and 2, it can be seen that the mixture falling from the rotary valve 3 is destined to be placed at the bottom of the first tank 4. Inside the tank a scraping unit is present which has a chain 40, rotated by a pair of toothed wheels 41 or by another equivalent device. At the external part of the chain 40, scraping transverse blades 42 are present which, following their cyclic movement, are adapted to pick up the shavings from the bottom and lift them, carrying them at an upper mouth 43 of the first tank 4; at the exit of the mouth 43 a special container 7 is present in which the mass of the shavings is adapted to be arranged. Inside the tank a rotary filter 50 with perforated walls is also present, consisting of a cylindrical structure with an axis arranged horizontally and with a mesh surface, as clearly visible in figure 2. With the methods which will be better explained below, said rotary filter 50 acts so as to guarantee the separation of the cutting fluid from the shavings. In particular, the cutting fluid, from which the shavings have been duly separated, accumulates on the bottom of the second tank 5 and is then picked up by a pump 10, which carries it to a third tank 6, from which it can be picked up in the manner described above.

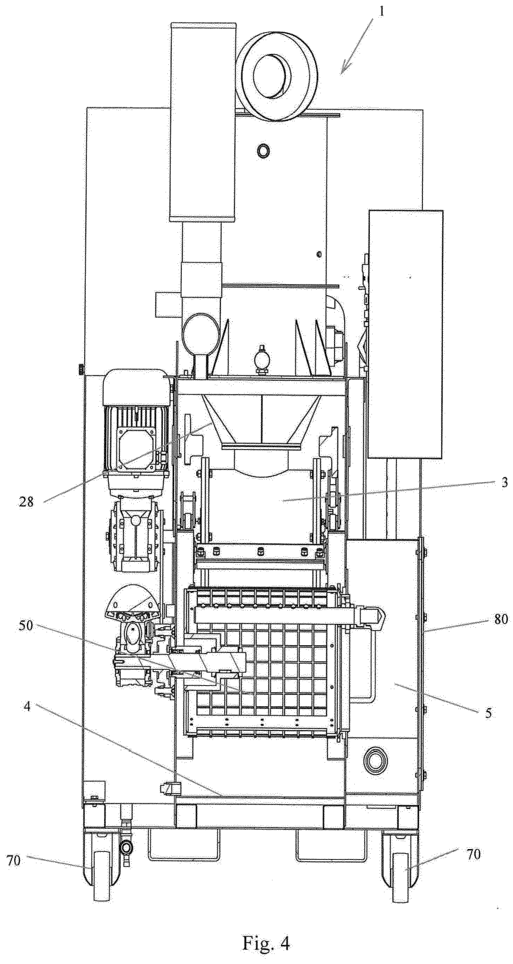

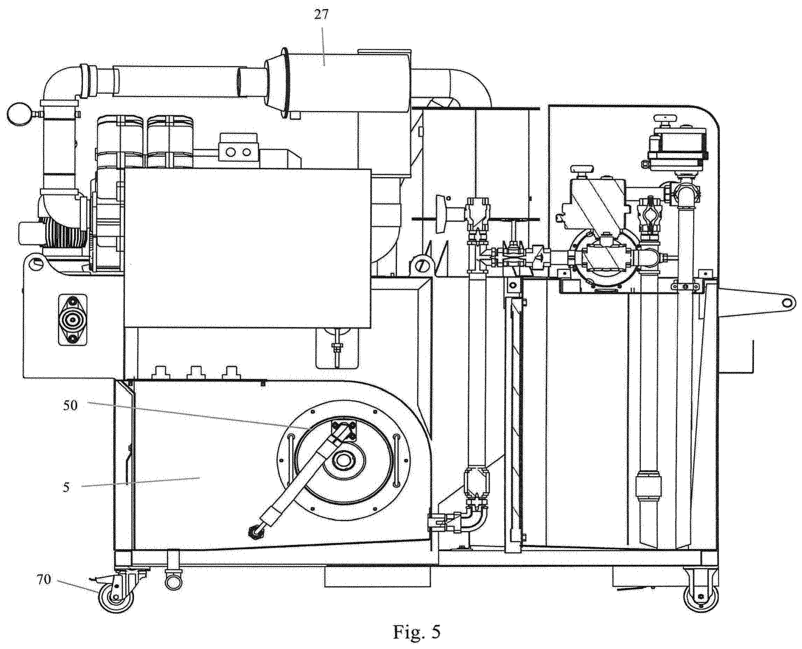

As can be seen in figures 4 and 5, it is envisaged that the mixture of cutting fluid and shavings, falling from the rotary valve 3, is destined to be placed on the bottom of the first tank 4 and it is naturally destined to accumulate and gradually rise; in the meantime, the scraping blades 42, moved by the chain 40, eliminate part of the shavings from the mixture, as seen above and illustrated in particular in figure 1. When the mixture reaches a certain level, which corresponds to the lower portion of the rotary filter 50, the cutting fluid portion of the mixture begins to penetrate into the rotary filter, through the mesh present on the external surface thereof. Vice versa, the shavings remain outside the rotary filter 50, since the width of the mesh will be provided precisely so that the shavings cannot penetrate through the mesh of the rotary filter 50 inside the aforesaid.

As can be seen clearly in figure 6, one of the lateral faces of the rotary filter 50 is open and therefore the cutting fluid present inside the rotary filter 50 is destined to fall into a second tank 5 placed laterally with respect to the rotary filter 50 itself. For the sake of clarity, it should be noted that in figure 5 the side closure wall 80 of the tank 5 is not clearly visible and vice versa is clearly present and visible in fig. 4. In fact, the situation shown in figure 2 occurs, in which it is seen that the shavings tend to accumulate in the bottom of the first tank 4, while the cutting liquid, through the rotary filter 50, goes to settle on the bottom of the second tank 5.

Advantageously, it is possible to envisage the presence of a pump 90, adapted to suck the cutting fluid from the bottom of the tank 5, to spray it on the mesh of the rotary filter 50, starting from the inside of the aforesaid, to ensure the effective cleaning of the mesh of the same rotary filter 50.

From the figures it can also be seen that, advantageously, the whole assembly will be equipped with wheels or other similar rolling means 70, to facilitate the movement of the device according to the invention, according to the needs of the user. In this way it is possible to place it near a machine tool, according to the particular needs of both picking up the mixture, through the conduit 9', and during the step of dispensing the clean cutting fluid through the gun 9.

From the foregoing, it can be seen that the only depression portion of the entire device is constituted by the turret 1 and the conduits immediately connected thereto. Vice versa, in the other parts of the device there is a normal atmospheric pressure. In this way, the only portion of the device which must be naturally sealed to guarantee the seal from infiltrations consists of the aforementioned turret 1, with a consequent advantage in construction simplicity, the overall weight of the structure, as well as the presence, only at the turret, of pneumatic and hydraulic sealing mechanisms. This intrinsically allows giving rise to a simple, inexpensive, and not particularly cumbersome device, which allows to solve the previously mentioned technical drawback.

## Claims

1. DEVICE ADAPTED TO THE SEPARATION OF SHAVINGS CONTAINED IN A CUTTING FLUID USED IN MACHINE TOOLS, comprising a first suction stage, consisting of a turret (1) with an inlet (23), into which a mixture of air and cutting fluid containing metal shavings to be treated can converge, a pump (2) acting on said turret (1), which pump is adapted to suck up said mixture, creating a depression inside said turret (1), within the aforesaid turret a plurality of inclined plates (24) being present, arranged above the point of inlet (23) of the mixture into the turret (1), which, in use, are flooded by said mixture, being able to intercept it and separating from the air the cutting fluid mixed with shavings that falls onto the bottom of the turret (1), where there is a rotary valve (3), which has a plurality of radial partitions (32), into which, in use, the mixture of cutting fluid and shavings enters, which mixture is made to fall into an underlying device for the complete separation of said two elements.

2. DEVICE, according to claim 1, **characterized in that** upstream of the pump (2) there is a coalescent filter (27) adapted to condense the residual liquid not intercepted by the plates (24), drawn in the fluid sucked by said pump (2).

3. DEVICE, according to claim 2, **characterized in that** it comprises a conduit (100) that connects the filter (27) with the inside of the turret (1), so that the cutting fluid captured in the filter can be re-introduced into the turret (1), thus being able to fall in the form of drops.

4. DEVICE, according to one or more of the preceding claims, **characterized in that** it comprises the device for the complete separation of the cutting fluid from the shavings consisting of a first containment tank (4), into which, in use, the mixture, which is deposited in its lower portion, precipitates, within said first tank (4) there being present a scraping unit, consisting of a chain system (40), provided with scraping transverse blades (42) which, following its cyclic movement, is adapted to carry the shavings towards an upper mouth (43) of the first tank (4), through which the shavings are discharged to the outside, being furthermore present inside the first tank (4), in a slightly raised position with respect to the bottom of said tank, a rotary filter (50) with perforated walls, so as to allow the entry of only the cutting fluid in its inside, a second tank (5) placed next to the first tank (4), and a third accumulation tank (6), said rotary filter (50) acting as a connecting means between the first tank (4) and the second tank (5) and into which the filtered cutting fluid can fall, a further pump (10) being also comprised, said further pump (10) being adapted to extract the cutting fluid from said second tank (5), and to pour it into the third accumulation tank (6), from which the shaving-free cutting fluid can be picked up for re-use.

5. DEVICE, according to one or more of the preceding claims, **characterized in that** there is a conduit (22) adapted to take the mixture of cutting fluid and shavings from a container (20) and convey it to the inside of the turret (1).

6. DEVICE, according to claim 4, **characterized in that** the whole assembly is supported by wheels (70) or by another similar rolling means to facilitate its movement.

7. TURRET with an inlet (23), which can present a depression inside caused by a pump (2) which, in use, sucks up a mixture of cutting fluid and shavings, within said turret (1) there being present a plurality of inclined plates (24), arranged above the point of inlet of the mixture into the turret, which, in use, are flooded by said mixture, intercepting it and being able to separate from the air the cutting fluid mixed with shavings that falls onto the bottom of the turret (1), where there is a rotary valve (3), which has a plurality of radial partitions (32), into which the mixture of falling cutting fluid and shavings can enter, which mixture is, when the rotary valve (3) is in use, made to fall into an underlying device for the complete separation of said two elements.

8. TURRET (1), according to claim 7, **characterized in that** some of the plates (24) are integral with the inner surface of the turret (1), while other plates (24) are integral with a central element (25) arranged axially within the turret (1).

## Patentansprüche

1. VORRICHTUNG ZUR TRENNUNG VON IN EINEM IN WERKZEUGMASCHINEN VERWENDETEN KÜHLSCHMIERSTOFF ENTHALTENEN SPÄNEN bestehend aus sie eine erste Saugstufe aufweist, bestehend aus einem Revolver (1) mit einem Eintritt (23) in den ein Gemisch aus Luft und Kühlschmierstoff, der zu behandelnde Metallspäne enthält, kann konvergieren, wobei eine Pumpe (2) auf den Revolver (1) einwirkt, welche Pumpe ist angepasst, um das Gemisch aufzusagen und im Inneren des Revolvers (1) einen Unterdruck erzeugt, wobei im vorgenannten Revolver eine Vielzahl von geneigten Platten (24) vorhanden ist, die über der Stelle für den Eintritt (23) des Gemischs in den Revolver (1) angeordnet sind, die, im Einsatz, von dem Gemisch geflutet werden, es ist in der Lage es anzufangen und den mit Spänen vermischten Kühlschmierstoff, der auf den Boden des Revolvers (1) fällt, von der Luft trennen, wobei ein Drehventil (3) vorhanden ist, das eine Vielzahl von radialen Trennwänden (32) aufweist, in die, im Einsatz, das Gemisch aus Kühlschmierstoff und Spänen eintritt, wobei das Gemisch in eine darunter liegende Vorrichtung zur vollständigen Trennung der beiden Elemente fallen gelassen wird.

2. VORRICHTUNG nach Anspruch 1, **dadurch gekennzeichnet, dass** stromaufwärts der Pumpe (2) ein Koaleszenzfilter (27) vorhanden ist, der ausgelegt ist, die Restflüssigkeit zu kondensieren, die nicht durch die Platten (24) abgefangen wurde, die im Fluid entnommen wird, das durch die Pumpe (2) eingesaugt wird.

3. VORRICHTUNG nach Anspruch 2, **dadurch gekennzeichnet, dass** sie eine Leitung (100) besteht aus, die den Filter (27) mit dem Inneren des Revolvers (1) verbindet, so dass der im Filter eingefangene Kühlschmierstoff kann wieder in den Revolver (1) eingeführt werden, wodurch es in Form von Tropfen fallen kann.

4. VORRICHTUNG nach einem oder mehreren der vorhergehenden Ansprüche, **dadurch gekennzeichnet, dass** sie die Vorrichtung zur vollständigen Trennung des Kühlschmierstoffs von den Spänen besteht aus, bestehend aus einem ersten Aufnahmetank (4), in dem, im Einsatz, das Gemisch, das in seinem unteren Abschnitt abgelagert ist, ausfällt, wobei innerhalb des ersten Tanks (4) eine Abstreifeinheit vorhanden ist, bestehend aus einem Kettensystem (40), das mit Abstreifquermessern (42) versehen ist, die beim Befolgen dessen zyklischer Bewegung die Späne in Richtung zu einer oberen Mündung (43) des ersten Tanks (4) ist angepasst, um zu tragen, durch die die Späne nach außen abgeführt werden, wobei ferner innerhalb des ersten Tanks (4) in einer leicht angehobenen Position in Bezug auf den Boden des Tanks ein Drehfilter (50) mit perforierten Wänden vorhanden ist, um den Eintritt nur des Kühlschmierstoffs in seinem Inneren zu ermöglichen, ein zweiter Tank (5), der neben dem ersten Tank (4) angeordnet ist und ein dritter Sammeltank (6)_wobei der Drehfilter (50) als Verbindungsmittel zwischen dem ersten Tank (4) und dem zweiten Tank (5) dient und in den der gefilterte Kühlschmierstoff fallen kann, wobei auch eine weitere Pumpe (10) vorgesehen ist, die weitere Pumpe (10) wird angepasst um den Kühlschmierstoff aus dem zweiten Tank (5) entzieht, und es in den dritten Sammeltank (6) zu gießen, aus dem der spanfreie Kühlschmierstoff zur Wiederverwendung entnommen werden kann.

5. VORRICHTUNG nach einem oder mehreren der vorhergehenden Ansprüche, **dadurch gekennzeichnet, dass** eine Leitung (22) vorhanden ist, die ausgelegt ist, das Gemisch aus Kühlschmierstoff und Spänen aus einem Behälter (20) zu entnehmen und es in das Innere des Revolvers (1) zu befördern.

6. VORRICHTUNG nach Anspruch 4, **dadurch gekennzeichnet, dass** die gesamte Baugruppe, durch Räder (70) oder andere ähnliche Rollmittel getragen wird, um ihre Bewegung zu erleichtern.

7. REVOLVER (1), mit einem Eintritt (23) der einen Unterdruck im Inneren aufweisen kann, der durch eine Pumpe (2) verursacht wird, die, im Einsatz, eine Gemisch aus Kühlschmierstoff und Spänen einsaugt, wobei innerhalb des Revolvers (1) eine Vielzahl von geneigten Platten (24) vorhanden ist, die über der Stelle für den Eintritt des Gemischs in den Revolver angeordnet sind, die, im Einsatz, von dem Gemisch geflutet werden, es abfangen und den mit Spänen vermischten Kühlschmierstoff, der auf den Boden des Revolvers (1) fällt, von der Luft trennen kann, wobei ein Drehventil (3) vorhanden ist, das eine Vielzahl von radialen Trennwänden (32) aufweist, in die das Gemisch aus fallendem Kühlschmierstoff und Spänen eintreten kann, wobei das Gemisch, wenn das Drehventil (3) verwendet wird, in eine darunter liegende Vorrichtung zur vollständigen Trennung der beiden Elemente fallen gelassen wird.

8. REVOLVER (1) nach Anspruch 7, **dadurch gekennzeichnet, dass** einige der Platten (24) einstückig mit der Innenfläche des Revolvers (1) ausgebildet sind, während andere Platten (24) einstückig mit einem zentralen Element (25) ausgebildet sind, das axial innerhalb des Revolvers (1) angeordnet ist.

## Revendications

1. DISPOSITIF APTE À LA SÉPARATION DE COPEAUX CONTENUS DANS UN LUBRO-RÉFRIGÉRANT UTILISÉ PAR DES MACHINES-OUTILS, comprenant un premier étage d'aspiration, constitué d'une tourelle (1) avec une entrée (23) dans laquelle peut converger un mélange d'air et de lubro-réfrigérant contenant des copeaux métalliques à traiter, une pompe (2) agissant sur ladite tourelle (1), laquelle pompe est adaptée pour aspirer ledit mélange, créant une dépression à l'intérieur de ladite tourelle (1), à l'intérieur de ladite tourelle sont présentes une pluralité de plaques inclinées (24), disposées au-dessus du point d'entrée (23) du mélange dans la tourelle (1), qui, en service, sont inondées par ledit mélange, pouvant l'intercepter et séparer de l'air le lubro-réfrigérant mélangé aux copeaux qui tombe sur le fond de la tourelle (1), où se trouve une soupape rotative (3), qui a une pluralité de cloisons radiales (32), dans lesquelles, en utilisation, entre le mélange de lubro-réfrigérant et de copeaux, lequel mélange tombe dans un dispositif sous-jacent pour la séparation complète desdits deux éléments.

2. DISPOSITIF, selon la revendication 1, **caractérisé en ce qu'**en amont de la pompe (2) se trouve un filtre coalescent (27) apte à condenser le liquide résiduel non intercepté par les plaques (24), tiré dans le fluide aspiré par ladite pompe (2).

3. DISPOSITIF, selon la revendication 2, **caractérisé en ce qu'**il comprend un conduit (100) qui relie le filtre (27) à l'intérieur de la tourelle (1), de sorte que le lubro-réfrigérant capturé dans le filtre puisse être réintroduit dans la tourelle (1), pouvant ainsi tomber sous forme de gouttes.

4. DISPOSITIF, selon une ou plusieurs des revendications précédentes, **caractérisé en ce qu'**il comprend le dispositif pour la séparation complète du lubro-réfrigérant des copeaux constitué d'un premier réservoir de confinement (4), dans lequel, en utilisation, se précipite le mélange qui se dépose dans sa partie inférieure, à l'intérieur dudit premier réservoir (4) est présente une unité de raclage, constituée d'un système de chaînes (40), munie de lames transversales de raclage (42) qui, suivant son mouvement cyclique, est apte à transporter les copeaux vers une bouche supérieure (43) du premier réservoir (4), à travers laquelle les copeaux sont déchargés à l'extérieur, étant en outre présent à l'intérieur du premier réservoir (4), dans une position légèrement surélevée par rapport au fond dudit réservoir, un filtre rotatif (50) à parois perforées, de manière à permettre l'entrée du seul lubro-réfrigérant à l'intérieur de celui-ci, une deuxième réservoir (5) placée à côté de la première réservoir (4), et une troisième accumulation réservoir (6), ledit filtre rotatif (50) agissant comme moyen de liaison entre le premier réservoir (4) et le deuxième réservoir (5) et dans lequel peut tomber le lubro-réfrigérant filtré, une autre pompe (10) étant également comprise, ladite autre pompe (10) étant adaptée pour extraire le lubro-réfrigérant dudit deuxième réservoir (5), et pour le verser dans le troisième réservoir d'accumulation (6), d'où le lubro-réfrigérant sans rasage peut être récupéré pour être réutilisé.

5. DISPOSITIF, selon une ou plusieurs des revendications précédentes, **caractérisé en ce qu'**il existe un conduit (22) adapté pour prendre le mélange de lubro-réfrigérant et de copeaux dans un récipient (20) et l'acheminer vers l'intérieur de la tourelle (1).

6. DISPOSITIF, selon la revendication 4, **caractérisé en ce que** l'ensemble est supporté par des roues (70) ou par un autre moyen de roulement similaire pour faciliter son déplacement.

7. TOURELLE (1) avec une entrée (23), qui peut présenter une dépression intérieure causée par une pompe (2) qui, en utilisation, aspire un mélange de lubro-réfrigérant et de copeaux, à l'intérieur de ladite tourelle (1) sont présentes une pluralité de plaques inclinées (24), disposées au-dessus du point d'entrée du mélange dans la tourelle, qui, en utilisation, sont inondées par ledit mélange, l'interceptant et pouvant séparer de l'air le lubro-réfrigérant mélangé aux copeaux qui tombe sur le fond de la tourelle (1), où se trouve une soupape rotative (3), qui présente une pluralité de cloisons radiales (32), dans lesquelles peut entrer le mélange de lubro-réfrigérant tombant et de copeaux, lequel mélange est, lorsque la vanne rotative la soupape (3) est en utilisation, amenée à tomber dans un dispositif sous-jacent pour la séparation complète desdits deux éléments.

8. TOURELLE (1), selon la revendication 7, **caractérisée en ce que** certaines des plaques (24) sont solidaires de la surface intérieure de la tourelle (1), tandis que d'autres plaques (24) sont solidaires d'un élément central (25) disposé axialement à l'intérieur de la tourelle (1).
